# EUROPEAN PATENT SPECIFICATION

(11) **EP 2 483 050 B1**
(45) Date of publication and mention of the grant of the patent: **07.08.2019**
(21) Application number: 10759905.2
(22) Date of filing: 30.09.2010
(51) Int. Cl.: B29C 45/57, B29C 45/56, B29K 105/00

(54) **INJECTION MOULDING METHOD**
SPRITZGUSSVERFAHREN
PROCÉDÉ DE MOULAGE PAR INJECTION

(30) Priority: 30.09.2009 GB 0917173
(43) Date of publication of application: 08.08.2012
(73) Proprietor: Gr8 Engineering Limited, Chichester PO19 7JU (GB)
(72) Inventor: Clarke, Peter Reginald, Graffham, Petworth GU28 0NU (GB)
(74) Representative: Jenkins, Peter David
(86) International application number: PCT/EP2010/064525
(87) International publication number: WO 2011/039296

(56) References cited:
- WO-A2-2008/084230
- DE-A1- 2 503 911
- DE-C1- 10 124 122
- JP-A- 55 079 232
- US-A- 5 219 512

## Description

The present invention relates to a method of injection moulding an article, or a plurality of articles. In particular, the present invention relates to the injection moulding of containers, and preforms for containers, from plastics material.

Injection moulding of articles from plastics materials, in particular thermoplastic polymers, is well known in the art. In particular, the injection moulding of containers, and preforms for containers, from plastics material is conventional in the art.

It is often desired to injection mould plastics containers having a small wall thickness, for example to reduce material costs. When it is necessary to injection mould a container having a high L/T ratio (where L is the flow length of the molten plastics material from the injection inlet and T is the wall thickness), a high injection pressure at the injection inlet is needed to ensure that the mould cavity is filled with the molten plastics material. The injection inlet acts to restrict material flow therethrough, and the wall section directly opposite the injection inlet also restricts the material flow into the cavity.

The conventional approach to attempt to reduce the high injection pressure at the injection inlet is to inject the molten plastics material at a faster injection rate, and to raise the melt temperature to lower the melt viscosity, to enable the mould to be filled by the molten plastics material.

It is also well known that in order to reduce the fill pressure, it is possible when designing a container to increase the base thickness, particularly in the injection inlet area. This injection inlet area is also the hottest area of the injection moulding. As all of the material in the sidewall has to flow across the base, within an interior gap defined between the static exterior skin layers laid down during the first phase of filling, base cooling is always a problem. Another problem with such laminar flow across the base is that the skins are progressively solidifying and therefore getting thicker, narrowing the flow channel. This causes a further restriction on the material flow.

All of this adds up to the need to flow the molten material into the cavity at a faster rate, and to do that one needs to increase the fill pressure. The higher fill pressure will, in turn, require a higher clamp pressure to counter the hydraulic force on the end of the core. It should be readily apparent to the skilled reader why injection moulding machines for the manufacture of plastics packaging need to have very high injection speeds and pressures, and very rigid platens, to make what appears to be a simple container or preform.

WO-A-2008/084230 discloses an injection mould for injection moulding an article having a base and a sidewall, the injection mould comprising: first and second mould parts which are adapted to be connected together in a closed configuration so as to define a mould cavity there between, the mould cavity having a base portion and a sidewall portion, an injector for injecting into the mould cavity molten material to be moulded into the article, at least one portion of one of the first and second mould parts being movable when the first and second mould parts are in the closed configuration so as to vary the volume of the mould cavity, an actuator for selectively moving the at least one portion of one of the first and second mould parts in first and second directions so as to increase and reduce, respectively, the volume of the mould cavity.

There is a need in the art for a cost effective, robust injection moulding process that at least partly overcomes the various problems with known processes as discussed above.

In particular, there is a need for an injection moulding process, and an apparatus therefor, that is suitable for producing injection moulded articles, such as containers, preforms for containers, lids, tubs, closures, etc. having high flow-length:wall thickness ratios, and/or low material stress, which can be produced using conventional injection moulding machines and therefore can be interfaced with the minimum of problems into conventional production practices.

The present invention aims at least partly to meet these needs in the art of container manufacture.

The present invention provides a method of injection moulding an article according to claim 1.

After substantially mould filling, the mould surface is restored to its original position. There is no increase in component weight or cooling time. The excess material is pushed back through the open injection inlet against the low holding phase pressure.

The at least one movable portion is urged into the forward position by an applied external pressure, applied by an actuator, and moved to the rearward position by pressure of the injecting molten material. The actuator pressure is less than 20 bar, and typically applied by compressed air when using an area ratio of less than 20:1, where 20 is the area of the actuator and 1 is the projected area of the moving cavity part. It will be readily apparent to those skilled in the art that smaller actuators could be used with higher pressures, such as typically used with hydraulic actuator systems i.e. 140 bar. A single actuator may be provided for plural mould cavities.

After the injected material has solidified, the applied external pressure is reduced during cooling of the injected material. This can be triggered at the start of the cooling phase or after a short delay. This provides the advantage that the cavity pressure is reduced before opening the mould. This reduces the cooling time.

Accordingly, the present invention provides a method which actively changes the L/T ratio during injection by allowing at least one strategic mould part to move back, before or during injection, to effectively lessen the L/T ratio. After the filling and holding phase, applied to the material within the mould, the mould part(s) is or are re-set. This substantially reduces the force required as there is no counter filling pressure from the moulding machine because the material has already fully filled the cavity and any shrinkage has been substantially accommodated by the holding phase. In the case of very thin walled containers with an L/T of 200:1 or greater, there is no holding phase, and the pressure is allowed to drop to zero.

Optionally, the container has an L/T ratio of 50:1 or greater, wherein where L is the flow length of the molten plastics material from the injection inlet and T is the wall thickness. Optionally, the container has an L:T ratio of 50:1 and the plastics material is polyethylene terephthalate having an intrinsic viscosity of at least 0.7. Alternatively, the container may have an L/T ratio of 200:1 or greater and the plastics material may have a Melt Flow Index (MFI) of greater than 50.

This invention in one particular embodiment employs a mould in an injection moulding machine in which the filling pressure of the injected material to be moulded is controlled by moving a core, or a part of a core, away from an the injection inlet. Alternatively, it is possible to move the cavity, or part the cavity, in the same way. In either case, this movement of a mould part can vary the volume of the base portion of the mould cavity, and increase the base thickness opposite the injection inlet and so reduces the L/T ratio, and thereby reduce the filling pressure of the injected material.

In a most preferred embodiment, the mould is provided with an injection inlet that does not have a valve.

The method can be used for injection moulding a variety of articles, such as PET preforms for containers, closures, lids, tubs, etc, which can be circular but optionally having a non-circular or non-rounded, e.g. rectangular, configuration.

Embodiments of the present invention will now be described by way of example only with reference to the accompanying drawing, in which:

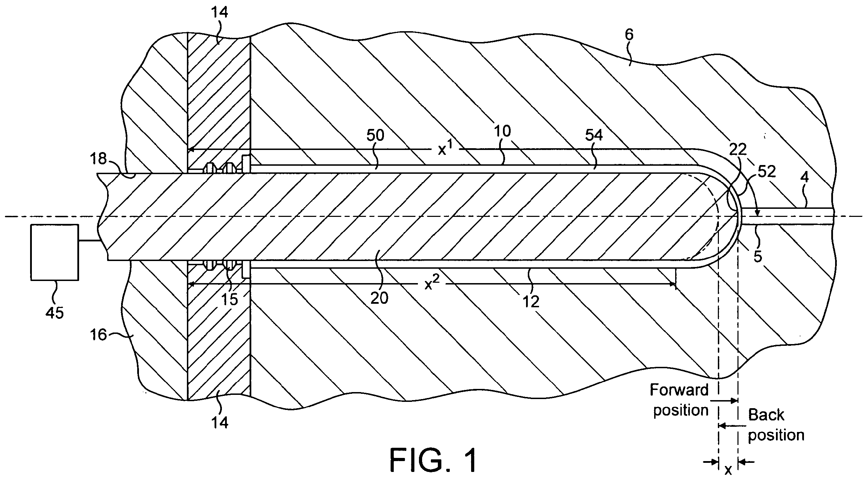

Figure 1 is a schematic cross-section through an injection mould having a movable core for use in a method in accordance with a first embodiment of the present invention.

Referring to Figure 1, there is shown an injection mould (2) for use in a method in accordance with a first embodiment of the present invention for injection moulding a preform, for example from polyester, particularly polyethylene terephthalate (PET), for subsequent blow moulding to form a container with an L/T of less than 100:1. Although the embodiment shows a preform, the invention can be used to mould other articles, as stated above, and using other thermoplastic resins.

The preform (50) is a hollow body and has a base (52) and a sidewall (54). The thermoplastic material to be moulded is injected through a feed nozzle (4) in a fixed part (6) of the injection mould (2) which partly defines an injection mould cavity (10). An injection inlet (5) of the feed nozzle (4) opens into the cavity (10). The fixed part (6) forms an outer surface (12) of the cavity (10) which in use defines the outer shape of the article to be injection moulded. A plurality of neck splits (14) is provided at the end (15) of the cavity (10) remote from the feed nozzle (4). The neck splits (14) are shaped to mould the outer shape of one end of the article to be injection moulded (in this embodiment the neck finish of a preform for subsequent blow moulding to form a bottle). The neck splits (14) also support the injection moulded article when it is removed from the cavity (10) after the injection moulded material has solidified.

A core bearing (16) is adjacent to the plurality of neck splits (14) and has a central bore (18) in which an elongate inlet core (20) is slidably received. The elongate inlet core (20) can be translated in a longitudinal direction coaxial with the axis of the cavity (10) and with the feed nozzle (4). Accordingly, the core (20) can selectively be slid in the core bearing (16) either forwardly in a direction into the cavity (10) towards the feed nozzle (4) or rearwardly in a direction out of the cavity (10) away from the feed nozzle (4). Such forward and backward movement can vary the distance of the free end (22) of the core (20) from the feed nozzle (4). The core (20) and the neck splits (14) are axially centered with respect to the axis of the cavity (10).

A pressure actuator (45), illustrated entirely schematically in Figure 1, pushes the core (20). The pressure actuator (45) may be pneumatically controlled, for example the pneumatic fluid being compressed air, or hydraulically controlled.

The maximum applied pressure of the pressure actuator (45) is less than 20 bars.

The pressure actuator (45) can be selectively pressurised to urge the core (20) to a forward position as shown in Figure 1. The forward position can be defined by a mechanical stop or by interlocking of the two mould parts comprised of the fixed part (6) and the movable core (20).

If the pressure actuator (45) actuator is not actuated, or only actuated at a low pressure which is lower than the injection pressure, then the injection pressure from the injecting molten resin material through the injection inlet (5) can urge the core (20) rearwardly to the rearward position as shown in Figure 1. The rearward position can be defined by a mechanical stop.

Before, or in the initial phase of, the injection moulding cycle the actuator pressure is low or off. In the case of thin walled containers the pressure may be constantly high to resist the very high injection speed and pressure. Consequently, the core (20) can be urged by the injection pressure in a direction away from the injection inlet (5) which causes the core (20) to move back smoothly against the injection pressure. This moves the core (20) to the position shown by dashed lines in Figure 1. This increases the thickness T of the portion of the (10) cavity adjacent to the injection inlet (5) by the distance x. The length of preform having the desired relatively small final wall thickness is correspondingly reduced from distance x¹ to x², as also shown in Figure 1. Accordingly, the L/T ratio is significantly reduced, thereby to keep the injection pressure within the cavity (10), in particular in the vicinity of the injection inlet (5), at a low or minimal value.

After mould filling, and additionally during mould filling when manufacturing thin walled containers having an L/T ratio of 200:1 or greater, the pressure actuator (45) urges the core (20) forwardly in a direction into the cavity (10) towards the feed nozzle (4), subject to the forward pressure applied to the core (20) overcoming any reverse injection pressure still in the cavity (10) The core (20) is returned to the original forward position which defines the final container shape and dimensions, thereby expelling any excess material back through the injection inlet (5).

During the cooling phase after solidification of the molten material, the pressure actuator (45) can be deactivated, or the pressure can be reduced, to relax the cavity pressure. This decreases the cooling time required before opening the mould.

Although various embodiments of the present invention have been described in detail, it will be apparent to those skilled in the art that other modifications of the injection mould and the injection moulding process may be employed that are within the scope of the invention as defined in the appended claims.

## Claims

1. A method of injection moulding an article (50), the method comprising the steps of:
(a) providing an injection mould (2) comprising first and second mould parts (6, 20), and having at least one movable portion (20) of one of the first and second mould parts(6, 20);
(b) disposing the first and second mould parts in a fully closed configuration so as to define a mould cavity (10) therebetween for moulding an article (50), in the fully closed configuration the first and second mould parts (6, 20) defining a cavity outer surface which defines the outer shape of the article (50) to be moulded in the mould cavity (10);
(c) injecting molten material into the cavity (10), at an injection apparatus filling pressure applied by the injection apparatus, at an injection inlet (5) of the cavity (10);
(d) during the injecting step, moving at least one movable portion (20) of one of the first and second mould parts (6, 20) from a forward position, defining the article (50) to be moulded, to a rearward position by pressure of the injecting molten material thereby to increase the volume of the mould cavity (10) in the fully closed configuration and to reduce the flow length/thickness ratio of the cavity (10);
(e) filling the mould cavity (10) with the molten material; and
(f) after filling the mould cavity (10), returning the at least one movable portion (20) from the rearward position to the forward position by an applied external pressure, applied by an actuator (45) wherein the actuator pressure is less than 20 bar, thereby expelling excess molten material back through the injection inlet (5) against a low holding phase pressure applied to the injected material by the injection apparatus, the holding phase pressure being selected to accommodate shrinkage of the injected material within the mould (2) during cooling, the mould surface being restored to its original forward position, wherein after the injected material has solidified, the applied external pressure is reduced during cooling of the injected material.

2. A method according to claim 1 wherein an area ratio between the actuator area and the area of the at least one movable portion is less than 20:1.

3. A method according to claim 1 or claim 2 wherein the actuator pressure is applied by compressed air or a hydraulic fluid.

4. A method according to any foregoing claim wherein the reduction of the applied external pressure can be triggered at the start of the cooling phase, or after a delay.

5. A method according to any foregoing claim wherein the injection inlet (5) is valveless.

6. A method according to any foregoing claim wherein the article (50) has an L/T ratio of 50:1 or greater, wherein where L is the flow length of the molten plastics material from the injection inlet and T is the wall thickness.

7. A method according to claim 6 wherein the article (50) has an L/T ratio of 50:1 and the plastics material is polyethylene terephthalate having an intrinsic viscosity of at least 0.7.

8. A method according claim 6 wherein the article (50) has an L/T ratio of 200:1 or greater and the plastics material has a Melt Flow Index (MFI) of greater than 50.

## Patentansprüche

1. Verfahren zum Spritzgießen eines Artikels (50), wobei das Verfahren die folgenden Schritte umfasst:
(a) Bereitstellen einer Spritzgussform (2), die einen ersten und einen zweiten Formteil (6, 20) umfasst und mindestens einen beweglichen Abschnitt (20) von einem von dem ersten und dem zweiten Formteil (6, 20) aufweist;
(b) Anordnen des ersten und des zweiten Formteils in einer vollständig geschlossenen Konfiguration, um ein Formnest (10) dazwischen zum Formen eines Artikels (50) zu definieren, wobei der erste und der zweite Formteil (6, 20) in der vollständig geschlossenen Konfiguration eine Formaußenfläche definieren, die die Außengestalt des in dem Formnest (10) zu formenden Artikels (50) definiert;
(c) Spritzen von geschmolzenem Material in das Nest (10) mit einem Spritzvorrichtungsfülldruck, der von der Spritzvorrichtung ausgeübt wird, an einem Spritzeinlass (5) des Nests (10);
(d) während des Spritzschritts Bewegen von mindestens einem beweglichen Abschnitt (20) von einem von dem ersten und dem zweiten Formteil (6, 20) aus einer vorderen Position, die den zu formenden Artikel (50) definiert, in eine hintere Position durch Druck des Spritzens von geschmolzenem Material, wodurch das Volumen des Formnests (10) in der vollständig geschlossenen Konfiguration erhöht und das Verhältnis von Fließweg zu Dicke des Nests (10) gesenkt wird;
(e) Füllen des Formnests (10) mit dem geschmolzenen Material und
(f) nach dem Füllen des Formnests (10) Zurückstellen des mindestens einen beweglichen Abschnitts (20) aus der hinteren Position in die vordere Position durch einen ausgeübten externen Druck, der von einem Stellglied (45) ausgeübt wird, wobei der Stellglieddruck weniger als 20 bar beträgt, wodurch überschüssiges geschmolzenes Material zurück durch den Spritzeinlass (5) gegen einen niedrigen Haltephasendruck, der von der Spritzvorrichtung auf das gespritzte Material ausgeübt wird, getrieben wird, wobei der Haltephasendruck ausgewählt ist, um eine Schrumpfung des gespritzten Materials innerhalb der Form (2) während eines Abkühlens zu berücksichtigen, wobei die Formfläche auf ihre ursprüngliche vordere Position zurückgesetzt wird, wobei, nachdem das gespritzte Material sich verfestigt hat, der ausgeübte externe Druck während eines Abkühlens des gespritzten Materials gesenkt wird.

2. Verfahren nach Anspruch 1, wobei ein Flächenverhältnis zwischen der Stellgliedfläche und der Fläche des mindestens einen beweglichen Abschnitts weniger als 20:1 beträgt.

3. Verfahren nach Anspruch 1 oder 2, wobei der Stellglieddruck durch Druckluft oder ein Hydraulikfluid ausgeübt wird.

4. Verfahren nach einem vorhergehenden Anspruch, wobei das Senken des ausgeübten externen Drucks zum Beginn der Abkühlphase oder nach einer Wartedauer ausgelöst werden kann.

5. Verfahren nach einem vorhergehenden Anspruch, wobei der Spritzeinlass (5) ventillos ist.

6. Verfahren nach einem vorhergehenden Anspruch, wobei der Artikel (50) ein F/D-Verhältnis von 50:1 oder höher aufweist, wobei F der Fließweg des geschmolzenen Kunststoffmaterials vom Spritzeinlass ist und D die Wanddicke ist.

7. Verfahren nach Anspruch 6, wobei der Artikel (50) ein F/D-Verhältnis von 50:1 aufweist und das Kunststoffmaterial Polyethylenterephthalat mit einer Grenzviskosität von mindestens 0,7 ist.

8. Verfahren nach Anspruch 6, wobei der Artikel (50) ein F/D-Verhältnis von 200:1 oder höher aufweist und das Kunststoffmaterial einen Schmelzindex (MFI) von mehr als 50 aufweist.

## Revendications

1. Procédé pour mouler par injection un article (50), le procédé comprenant les étapes consistant à :
(a) former un moule d'injection (2) comportant une première et une deuxième pièces du moule (6, 20), et comportant au moins une partie amovible (20) de l'une des première et deuxième parties du moule (6, 20) ;
(b) agencer la première et la deuxième partie du moule selon une configuration totalement fermée de sorte à définir une cavité de moule (10) entre elles pour mouler un article (50), selon la configuration totalement fermée la première et la deuxième parties du moule (6, 20) définissant une surface externe de la cavité qui définit la forme externe de l'article (50) à mouler dans la cavité du moule (10) ;
(c) injecter une matière fondue dans la cavité (10), sous une pression de remplissage de l'appareil d'injection appliquée par l'appareil d'injection, à hauteur de l'entrée d'injection (5) de la cavité (10) ;
(d) lors de l'étape d'injection, déplacer au moins une partie amovible (20) de l'une de la première et de la deuxième parties du moule (6, 20) d'une position avancée, définissant l'article (50) à mouler, à une position reculée sous l'action de la pression de la matière fondue pour accroître ainsi le volume de la cavité du moule (10) dans la configuration totalement fermée et pour réduire le rapport longueur/épaisseur du débit de la cavité (10) ;
(e) remplir la cavité du moule (10) de la matière fondue ; et
(f) une fois la cavité du moule remplie (10), revenir à la au moins une partie amovible (20) de la position reculée à la position avancée, sous l'effet d'une pression externe qu'applique un actionneur (45), dans lequel la pression de l'actionneur est inférieure à 20 bars, expulsant ainsi le surplus de matière fondue pour le refouler dans l'entrée d'injection (5) contre une pression à faible phase de maintien qu'applique l'appareil d'injection sur la matière injectée, la pression à faible phase de maintien étant sélectionnée pour accepter le retrait de la matière injectée au sein du moule (2) au cours d'un refroidissement, la surface du moule étant rétablie à sa position avancée originale, dans lequel une fois la matière injectée solidifiée, la pression externe appliquée est réduite au cours du refroidissement de la matière injectée.

2. Procédé selon la revendication 1, dans lequel un rapport de surface entre la surface de l'actionneur et la surface de la au moins une partie amovible est inférieure à 20 :1.

3. Procédé selon, soit la revendication 1, soit la revendication 2, dans lequel la pression de l'actionneur est appliquée par de l'air comprimé ou par un fluide hydraulique.

4. Procédé selon l'une quelconque des revendications précédentes, dans lequel la réduction de la pression externe appliquée peut être déclenchée au début de la phase de refroidissement, ou après un délai donné.

5. Procédé selon l'une quelconque des revendications précédentes, dans lequel l'entrée d'injection (5) ne comporte pas de soupape.

6. Procédé selon l'une quelconque des revendications précédentes, dans lequel l'article (50) à un rapport L/É de 50 :1 ou supérieur, dans lequel L représente la longueur d'écoulement de la matière plastique fondue en provenance de l'entrée d'injection et É représente l'épaisseur de paroi.

7. Procédé selon la revendication 6, dans lequel l'article (50) a un rapport L/É de 50 :1 et la matière plastique est du polyéthylène téréphtalate ayant une viscosité intrinsèque d'au moins 0,7.

8. Procédé selon la revendication 6, dans lequel l'article (50) a un rapport L/É de 200 :1 ou supérieur et la matière plastique à un Indice d'écoulement à l'état fondu (MFI) supérieur à 50.
